# EUROPEAN PATENT APPLICATION

(11) **EP 3 118 867 A1**
(43) Date of publication of application: **18.01.2017**
(21) Application number: 15177312.4
(22) Date of filing: 17.07.2015
(51) Int. Cl.: H01F 27/28, H01F 38/14

(54) **INDUCTIVE POWER TRANSFER SYSTEM**

(71) Applicant: ABB Technology AG, 8050 Zürich (CH)
(72) Inventor: Wunsch, Bernhard, 5405 Baden-Dättwil (CH); Oedegard, Bjoern, 5300 Turgi (CH); Baumann, David, 5503 Schafisheim (CH); Steinke, Jürgen, 79774 Albbruck (DE); Velthuis, Rudi, 79787 Lauchringen (DE); Gradinger, Thomas, 5032 Aarau Rohr (CH)
(74) Representative: ABB Patent Attorneys

(57) **Abstract**

The present invention is concerned with an inductive power transfer system for providing power to a gate drive on medium or high electrical potential. The inductive power transfer System has a first spiral coil (11) having a front side facing an axially displaced second coil (12) magnetically coupled to the first coil. Inner or central turns of the first coil are arranged in and define a first coil plane (110), while outer turns of the first coil extend axially out of the first coil plane and are bent away from the second coil. The geometric field grading achieved by this arrangement decreases a maximum electric field strength at the surface of the coil conductors, and thus simplifies the insulation tasks.

## Description

### FIELD OF THE INVENTION

The invention relates to the field of power electronic applications such as power or frequency conversion based on power semiconductor switches operated via a gate drive. Specifically, it departs from an inductive power transfer system for providing power to a gate drive on elevated electrical potential.

### BACKGROUND OF THE INVENTION

Medium-voltage and high-voltage power-electronic applications operate at system voltages of tens to hundreds of kilovolts. To reach these voltages with power semiconductors that have a blocking voltage on the order of a few kilovolts only, semiconductors are frequently connected in series. Most of the semiconductor packages in such a configuration are on an elevated voltage level and cannot be mounted directly on grounded components. Accordingly the auxiliary power that is needed to switch the semiconductors via a gate driver has to be supplied on potential. To this end galvanically insulated power supplies are used. Such power supplies transfer relatively low powers of the order of ten to a few hundred Watts to high voltages in the range of tens to hundreds of kilovolts. The functional voltage supplied at the output of the power supply is typically only 30-40V and contrasts with the large operational voltage and corresponding insulation challenges.

Conventional galvanically insulated power supply systems include transformers with at least two windings that are inductively coupled. A coupling coefficient close to 1 is indicative of strong or efficient coupling, with the magnetic flux being guided in an essentially closed core around which the windings are wrapped. In such transformer designs, the electric insulation required between high-voltage winding and core is relatively complex and expensive, often results in a bulky design and even might cause reliability issues.

The insulation task is simplified by introducing a plane that separates high- and low-voltage parts of the power supply in so-called Inductive Power Transfer (IPT) systems. IPT designates inductive power transfer with a coupling coefficient clearly below 1, such as 0.3 or even lower. In an IPT system the magnetic flux between the windings is not guided by a core, but passes through an insulating material. The absence of a closed core offers the possibility of introducing an essentially planar electric insulation.

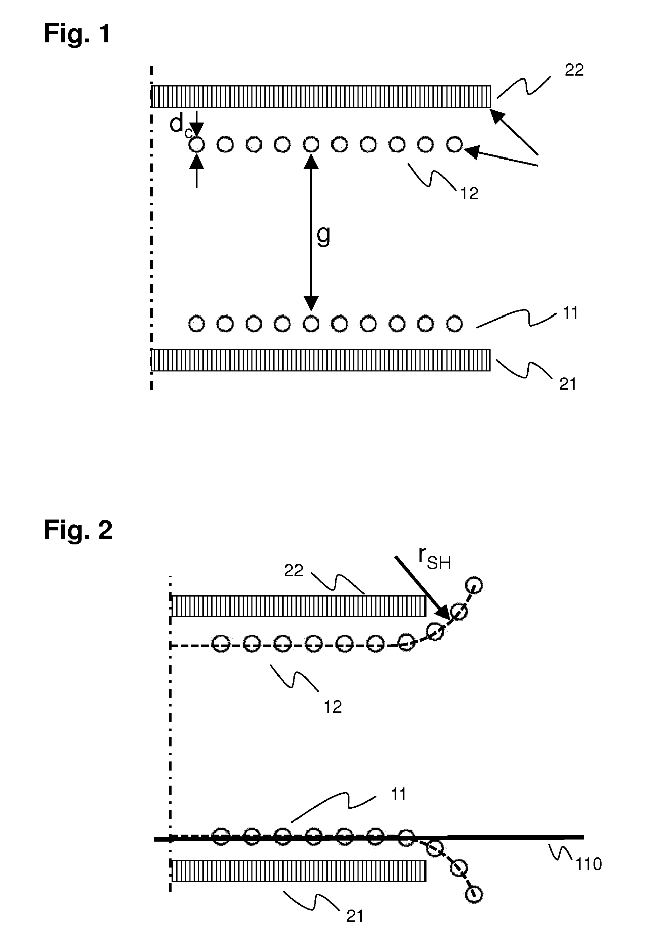

Fig.1 depicts a cross section along a vertical system or rotational axis of a conventional Inductive Power Transfer (IPT) system. The IPT System has a first spiral coil 11 with a front side facing a second spiral coil 12 that is displaced along the axis from the first coil by a distance g. In operation, the two coils are at different voltage levels and inductively coupled. Instead of a closed core, two plate-shape magnetic cores 21, 22 may be used as "magnetic shields" and to partially guide the magnetic flux. The coils are made of wire material with a circular cross section of diameter d_{c}. The electric insulation between the coils may include a solid dielectric material, or a gas such as air separating the windings. Electric field peaks occur at edges or corners of either the coil or the magnetic core, as indicated by the arrows. Specifically, the edges are the outermost turns and the magnetic core may provoke field peaks that lead to corona discharge, internal partial discharge, and dielectric breakdown.

### DESCRIPTION OF THE INVENTION

It is an objective of the invention to improve the electrical insulation of an inductive power transfer system, and to reduce the distance between the coils and/or increase the insulation voltage. This objective is achieved by systems according to the independent claims. Preferred embodiments are evident from the dependent patent claims.

According to the invention, an Inductive Power Transfer System has a first spiral coil having a front side facing an axially displaced second coil magnetically coupled to the first coil. Inner or central turns of the first coil are arranged in and define a first coil plane, while outer turns of the first coil extend axially out of the first coil plane and are bent away from the second coil. The geometric field grading achieved by this arrangement decreases a maximum electric field strength at the surface of the coil conductors, and thus simplifies the insulation tasks.

In a preferred variant of the invention the IPT system includes a first ferrite core element to improve the magnetic coupling of the two coils. The core element is arranged in close proximity to and facing a rear, concave side of the first coil opposite to the second coil and has a first planar surface area parallel to the first coil plane and delimited by a first circumference. The outer turn of the first coil extends laterally beyond the first circumference and an average, axial distance of the outer turn from the first coil plane exceeds a distance of the first planar surface area of the core element from the first coil plane. The coil is shaped towards and partly enclosing and electrically screening the first core element to decrease a maximum electric field strength occurring at the core element, and thus further simplifies the insulation tasks.

In a preferred variant of the invention, the IPT system has an axial coil distance g between the first coil plane and a second coil plane defined by inner turns of the second coil. Outer turns of the first coil at least approximate a segment of an outer surface of a ring torus with a radius r_{SH} of the revolving circle of the torus, wherein r_{SH} > g / 10, more particularly wherein r_{SH} > g / 3.

In advantageous embodiments of the invention the first coil is made or wound of wire material. This is easy to manufacture by means of a 3D printed bobbin design that fixes both the conductor at the rear side of the first coil as well as the first core element to the correct form and position. The wire material may include pipes or other hollow conductors instead of solid wires. Since the power transmission requires high frequencies between 10 kHz and 1 MHz electric conduction takes place predominantly on the surface of the conductors. The useful conductor thickness determined by the skin effect may therefore be well below 1 mm for a typical frequency of 100 kHz. Using pipes reduces weight, improves manufacturability and could even allow for cooling. With a circular cross-section of the wire material of radius r_{C} an average axial distance of the outer turn of the first coil from the first coil plane exceeds the wire radius r_{C} to provide for minimum screening.

In another advantageous embodiment of the invention the first coil of the IPT system includes an essentially flat or two-dimensional conductor track applied to, or printed on, a non-planar support surface. Such a structure may be obtained by way of 3D Molded Interconnect Device technology combining high temperature thermoplastics substrates with structured metallization circuitry.

In a variant of the invention the first coil and core element are cast or embedded in a first dielectric material to increase the critical electric field strength with respect to air. An intermediate layer of a second, or intermediate, dielectric material having a second dielectric constant that is lower than a first dielectric constant of the first dielectric material is provided in between the first coil and the second coil. The intermediate layer provides for refractive, non-geometrical field grading, and particularly results in lower electric fields in the first dielectric material surrounding the first coil.

In an ultimate variant of the invention, the IPT system has no additional conductive layer or guard ring for electric field grading between the first and the second coil, excluding even a printed conductive surface or sprayed conductive varnish. Manufacturing of the system becomes easier.

The IPT system is most beneficially employed in a power electronic system for power or frequency conversion, static VAr compensation (Statcom applications), or motor drives. The power electronic system has power semiconductors switches controlled, driven or operated via controllers or gate drives on medium or high potential that in turn are supplied with power via IPT systems from a power source on ground potential.

### BRIEF DESCRIPTION OF THE DRAWINGS

The subject matter of the invention will be explained in more detail in the following text with reference to preferred exemplary embodiments which are illustrated in the attached drawings, in which:
Fig.1 is a cross section of a conventional Inductive Power Transfer (IPT) system;
Fig.2 is a cross section of an IPT system with non-planar coils;
Fig.3 and Fig.4 depict a magnetic coupling for the IPT systems of Fig.2 and Fig.1;
Fig.5 and Fig.6 depict an electric field strength for the IPT systems of Fig.1 and Fig.2;
Fig.7 is a cross section of an IPT system with flat conductors;
Fig.8 is a cross section of an IPT system with flat conductors on a non-planar support;
Fig.9 depicts an electric field strength for the IPT systems of Fig.7 and Fig.8;

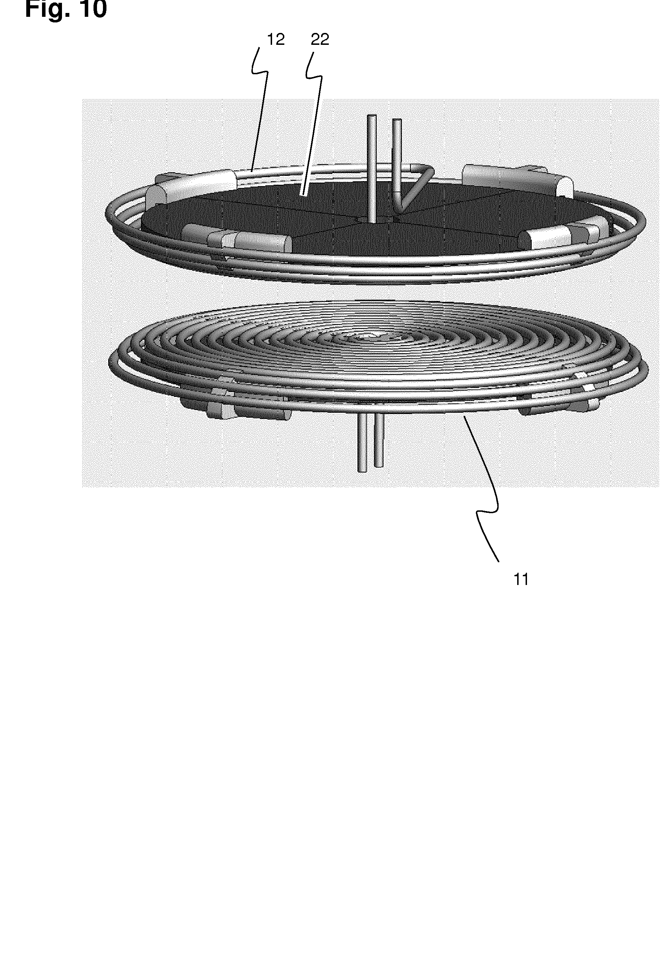

Fig.10 is a 3D picture of an IPT system with non-planar coils.

In principle, identical parts are provided with the same reference symbols in the figures.

### DETAILED DESCRIPTION OF PREFERRED EMBODIMENTS

Fig.2 depicts a cross section along a vertical system axis of an Inductive Power Transfer (IPT) system. The IPT System has a first spiral coil 11 with a front side facing a second spiral coil 12 that is arranged co-axially with and displaced along the system axis from the first coil. Optional disc- or plate-shaped magnetic core elements 21, 22 made of ferrite are used as "magnetic shields" and partially guide the magnetic flux to improve the inductive coupling of the two coils. The seven innermost or central turns of the first coil are arranged in and define a first coil plane 110. The four outermost or peripheral turns at least approximate a segment of an outer surface of a ring torus with a radius r_{SH} of the revolving circle of the torus, in other words the peripheral turns define an out-of-coil-plane curvature of radius r_{SH}.

Electric field peaks occur at edges or corners of either the coil or the magnetic core. Corners are easily avoided by coils and magnetic cores that are rotationally symmetric around the vertical axis, as opposed to rectangular spirals or other shapes with pronounced corners. The symmetry plane perpendicular to the axis may be present in the case of a voltage ratio of 1 where the two coils in fact may be identical. Nevertheless voltage ratios different from 1 are also possible.

According to the present invention, the coils are bent away from each other near the outer edges as shown in Fig.2, thereby forming two fictitious bowl-shaped surfaces with the convex sides of the two fictitious surfaces and of the coils facing each other. The magnetic core elements are arranged at the concave sides of the two fictitious surfaces and at least in part inserted in the bowls. In the proposed design the ferrite plate is electrically screened by the coil and the field enhancements at the outer turns are strongly reduced. Electric field peaks present in conventional flat or planar coil arrangements are avoided, which ultimately improves the insulation performance of the IPT system.

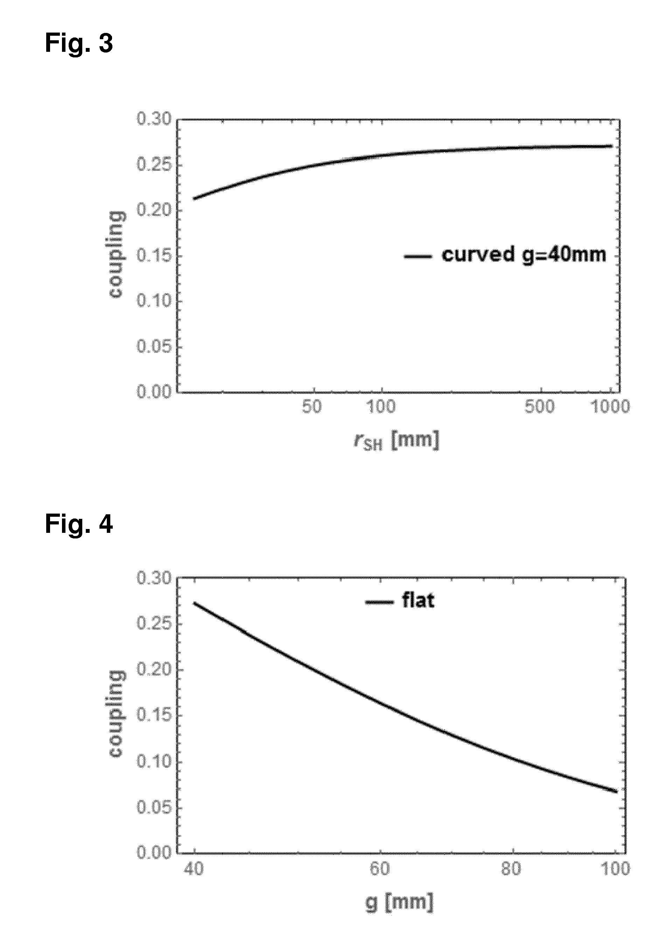

Fig.3 depicts the simulated magnetic coupling between the two coils of Fig.2 as a function of the curvature radius r_{SH}. Pronounced bending of the outer turns only slightly reduces the magnetic coupling between coils.

Fig.4 depicts the simulated magnetic coupling between the two coils of Fig.1 as a function of the inter-coil distance g. Increasing the distance between the coils strongly reduces magnetic coupling between coils.

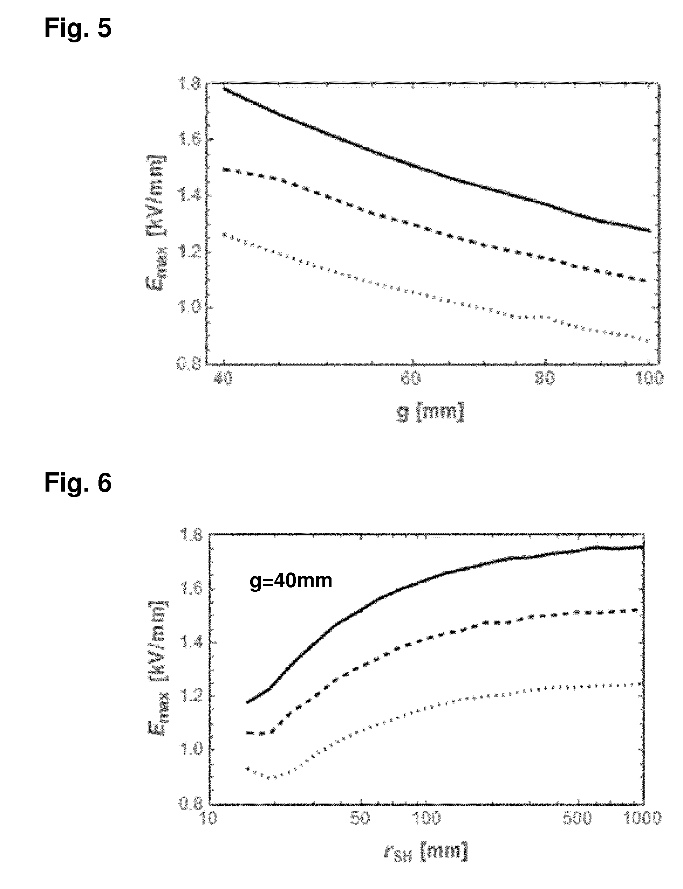

Fig.5 depicts the simulated maximum electric field in the IPT system of Fig.1 as a function of distance g between the coils for a conductor (wire) diameter d_{c} of 3 mm (solid line), 4 mm (dashed line) and 6 mm (dotted line), each at an applied voltage of 20 kV. The larger the diameter, the smaller the maximum electric field.

Fig.6 depicts the simulated maximum electric field in the IPT system of Fig.2 as a function of the curvature radius r_{SH} for a conductor (wire) diameter d_{c} of 3 mm (solid line), 4 mm (dashed line) and 6 mm (dotted line). The maximum electric field can be strongly reduced by bending the outer turns.

The foregoing figures may serve as prove that a reasonable magnetic coupling as basically enabled by a small distance g is only moderately compromised by bending the outer turns and thus increasing an average inter-coil distance. On the other hand, the reduction in maximum electric field strength by said bending of the outer turns becomes very attractive, and in turn allows to decrease the average inter-coil distance (thus improving on coupling) and/or to decrease the conductor diameter (thus saving conductor volume) for a same electric field.

The electric insulation between the coils may include a solid dielectric material, a liquid, or a gas such as air. Any kind of insulation material will benefit from a reduced maximum field strength and/or from a more homogeneous electric field distribution as a result of the proposed geometry. As a result, the distance between the coils can be further reduced, which increases the magnetic coupling between the coils and therefore allows for a smaller and/or more efficient design and/or higher insulation voltages.

In a somewhat alternative design, instead of wire material, flat or planar conductors preferably in the form of printed traces on suitable support surfaces are forming the windings of the coils.

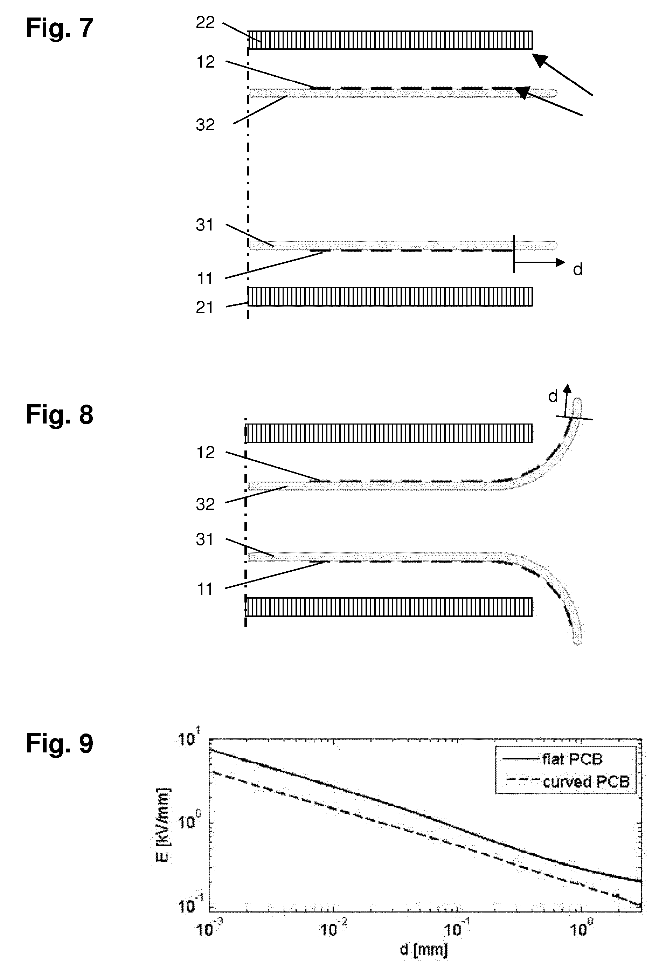

Fig.7 depicts a cross section along a vertical system axis of an Inductive Power Transfer (IPT) system with flat or planar coil conductor traces. The IPT system has a first spiral coil 11 with a front side facing a second spiral coil 12 that is arranged co-axially with and displaced along the system axis from the first coil. The coil conductors are printed traces on planar coil substrates 31, 32 as obtained by conventional PCB technology. Optional disc- or plate-shaped magnetic core elements 21, 22 made of ferrite are used as "magnetic shields" and partially guide the magnetic flux to improve the inductive coupling of the two coils. Electric field peaks occur at edges or corners of either the coil or the magnetic core, as indicated by the two thick arrows. A horizontal distance d on the surface of the substrate 31 distance d from the outer edge of the outermost turn of the first coil is indicated by a small arrow.

Fig.8 depicts a cross section along a vertical system axis of an Inductive Power Transfer (IPT) system with flat conductor traces on a non-planar support. The IPT system has a first and second spiral coil 11, 12 made of conductor tracks or traces applied on a first and second non-planar support or substrate 31, 32. The four outermost turns of the coils are clearly out of the coil plane defined by the inner turns. A distance d from the outer edge of the outermost turn of the second coil extending almost vertically on a surface of the second support 32 is indicated by a small arrow.

Applying conductor traces on non-planar support surfaces may be accomplished by various manufacturing technologies including 3D MID (3 Dimensional Molded Interconnect Device) technology. A molded interconnect device (MID) is an injection-molded thermoplastic part with integrated electronic circuit traces. 3D MID technology combines high temperature thermoplastics substrate/housing with structured metallization circuitry into a single part through selective metallization.

Fig.9 is a comparison of the simulated maximum electric field strengths on the support surface adjacent to the outer edge of the outermost turn as a function of the distance d in the two configurations of Fig.7 (solid line) and Fig.8 (broken line). By bending the outer traces upwards, the electric field is strongly reduced. The applied voltage was 20 kV at a coil distance g of 40 mm.

While the invention has been described in detail in the drawings and foregoing description, such description is to be considered illustrative or exemplary and not restrictive. Variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. The mere fact that certain elements or steps are recited in distinct claims does not indicate that a combination of these elements or steps cannot be used to advantage, specifically, in addition to the actual claim dependency, any further meaningful claim combination shall be considered disclosed.

## Claims

1. Inductive Power Transfer System with a first coil (11) having a front side facing a second coil (12), wherein inner turns of the first coil are arranged in a first coil plane (110), **characterized in that** an outer turn of the first coil extends out of the first coil plane away from the second coil.

2. The system of claim 1, including a first core element (21) facing a rear side of the first coil and having a first planar surface area parallel to the first coil plane and delimited by a first circumference, **characterized in that** the outer turn extends beyond the first circumference and **in that** a distance of the outer turn from the first coil plane exceeds a distance of the first planar surface area of the core element from the first coil plane.

3. The system of claim 1 or 2 with a coil distance g between the first coil plane and a second coil plane defined by inner turns of the second coil, **characterized in that** outer turns of the first coil approximate an outer surface of a ring torus with a radius r_{SH}, wherein r_{SH} > g / 10, more particularly r_{SH} > g / 3.

4. The system of one of claims 1 to 3, **characterized in that** the first coil is made of wire material.

5. The system of claim 4, **characterized in that** the wire material includes hollow pipes.

6. The system of claim 4 or 5, wherein the wire material has a circular cross-section of radius r_{C}, **characterized in that** a distance of the outer turn from the first coil plane exceeds the wire radius r_{C}.

7. The system of one of claims 1 to 3, **characterized in that** the first coil (11) includes a flat conductor applied to a non-planar support surface (31).

8. The system of one of claims 1 to 7, wherein the first coil and core element are cast in a first dielectric material, **characterized by** a layer of a second dielectric material in between the first coil and the second coil.

9. The system of any of claims 1 to 8, wherein no additional conductive layer for electric field grading is provided between the first and second coil.

10. A power electronic system with a power semiconductor switch controlled by a controller supplied with power via an IPT system as claimed in any of the preceding claims.
